# FASCICULE DE BREVET EUROPEEN

(11) **EP 0 608 184 B1**
(45) Date de publication et mention de la délivrance du brevet: **05.08.1998**
(21) Numéro de dépôt: 94420003.9
(22) Date de dépôt: 07.01.1994
(51) Int. Cl.: H01H 83/22, H01H 71/02

(54) **Disjoncteur différentiel modulaire**
Modularer Differenzstromschutzschalter
Modular differential circuit breaker

(30) Priorité: 18.01.1993 FR 9300502
(43) Date de publication de la demande: 27.07.1994
(73) Titulaire: SCHNEIDER ELECTRIC SA, 92100 Boulogne Billancourt (FR)
(72) Inventeur: Vieux, Michel, F-38050 Grenoble Cedex 09 (FR)
(74) Mandataire: Hecké, Gérard

(56) Documents cités:
- EP-A- 0 375 568
- DE-U- 7 637 590
- FR-A- 2 125 425

## Description

La présente invention concerne un disjoncteur différentiel modulaire selon le préambule de la revendication 1 et plus particulièrement un disjoncteur différentiel constitué par un disjoncteur multipolaire et par un bloc de protection différentielle, le bloc de protection différentielle étant prévu pour pouvoir s'accoupler latéralement de façon amovible au disjoncteur multipolaire.

Il est d'une pratique courante de constituer un disjoncteur différentiel en accouplant un disjoncteur multipolaire à un bloc de protection différentielle. La personne qui est chargée d'effectuer cette opération est en général un installateur qui dispose d'un grand nombre de disjoncteurs multipolaires et de blocs de protection différentielle, ces deux types d'appareils différant les uns des autres par leur nombre de pôles. En général, il existe ainsi, pour un même type d'appareil, des disjoncteurs multipolaires à 2 pôles, à 3 pôles et à 4 pôles et des blocs de protection différentielle à 2 pôles, à 3 pôles et à 4 pôles. Bien sûr, l'installateur doit veiller à constituer un disjoncteur différentiel particulier en associant un disjoncteur multipolaire ayant un certain nombre de pôles avec un bloc de protection différentielle ayant le même nombre de pôles.

Dans la plupart des disjoncteurs différentiels connus, il est malheureusement possible d'accoupler un disjoncteur multipolaire ayant un certain nombre de pôles avec un bloc de protection différentielle ayant un nombre de pôles différent. Le document DE-U-7637590 prévoit l'assemblage normal d'un bloc différentiel tétrapolaire à un disjoncteur tétrapolaire. Mais l'accouplement mécanique d'un bloc différentiel tripolaire sur le disjoncteur tétrapolaire reste néanmoins possible. Il est évident pour l'homme du métier qu'un assemblage d'un disjoncteur multipolaire ayant un certain nombre de pôles avec un bloc de protection différentielle ayant un nombre de pôles différent ne peut pas fonctionner. En effet, si le nombre de pôles du bloc de protection différentielle est inférieur à celui du disjoncteur multipolaire, le bloc de protection différentielle effectue la somme des courants qui circulent dans seulement certains des pôles du disjoncteur, et par conséquent, la somme des courants détectée n'est jamais nulle et le disjoncteur différentiel disjoncte instantanément lors de chaque mise en fonctionnement. Si le nombre de pôles du bloc de protection différentielle est supérieur à celui du disjoncteur multipolaire, soit l'ensemble ainsi constitué ne fonctionne pas parce qu'il disjoncte aussi instantanément, soit l'ensemble peut fonctionner mais il constitue un danger potentiel parce qu'au moins une borne en excès du bloc de protection différentielle n'est pas connectée.

Un objet de la présente invention consiste à proposer un disjoncteur différentiel dans lequel il est impossible d'accoupler par erreur un disjoncteur multipolaire ayant un certain nombre de pôles avec un bloc de protection différentielle ayant un nombre de pôles différent.

Un autre objet de l'invention consiste à proposer un tel disjoncteur différentiel dans lequel ladite impossibilité d'accouplement par erreur est obtenue en réalisant des organes de détrompage constitués par des modifications structurelles mineures apportées à des disjoncteurs différentiels connus.

Selon l'invention cet objet est atteint par un disjoncteur différentiel modulaire comprenant:
un disjoncteur multipolaire choisi parmi un groupe de disjoncteurs multipolaires qui diffèrent les uns des autres par leur nombre de pôles, chaque disjoncteur multipolaire ayant des bornes de raccordement, en nombre égal au nombre de pôles, situées au niveau d'une face latérale de raccordement du disjoncteur multipolaire ;
un bloc de protection différentielle choisi parmi un groupe de blocs de protection différentielle qui diffèrent les uns des autres par leur nombre de pôles, chaque bloc de protection différentielle ayant des fils de raccordement, en nombre égal au nombre de pôles, montés sur un cache-fil rigide,
un quelconque de ces disjoncteurs multipolaires étant prévu pour pouvoir s'accoupler latéralement de façon amovible à un bloc de protection différentielle de façon à ce que lesdites bornes de raccordement se connectent auxdits fils de raccordement respectifs ; caractérisé en ce que
ledit cache-fil comporte des premiers organes de détrompage qui coopèrent avec des seconds organes de détrompage ménagés au niveau de ladite face latérale de raccordement du disjoncteur multipolaire, de telle sorte qu'un disjoncteur multipolaire donné ne puisse s'accoupler qu'à un bloc de protection différentielle ayant le même nombre de pôles,
lesdits premiers et seconds organes de détrompage étant soit d'un premier type, soit d'un second type, et étant susceptibles de s'accoupler l'un à l'autre uniquement lorsqu'ils sont du même type, lequel est choisi pour chaque borne de raccordement de chaque disjoncteur modulaire et pour chaque fil de raccordement de chaque bloc de protection différentielle, de telle sorte que ledit accouplement entre un disjoncteur modulaire donné et un bloc de protection différentielle ayant le même nombre de pôles soit rendu possible du fait que les premiers organes de détrompage sont simultanément tous accouplés aux seconds organes de détrompage correspondants.

Selon un mode de réalisation préférentiel de l'invention, un tel disjoncteur différentiel modulaire dans lequel le disjoncteur multipolaire comprend, en correspondance avec chaque borne de raccordement, un logement qui débouche au niveau de ladite face latérale de raccordement et un verrou de fixation emboîtable et déplaçable dans le logement est caractérisé en ce que : une face plane dudit cache-fil est destinée à venir s'appliquer contre ladite face latérale de raccordement du disjoncteur multipolaire lorsque le disjoncteur multipolaire est accouplé au bloc de protection différentielle ; ledit premier organe de détrompage du premier type est constitué par la présence dans ledit logement d'un dit verrou de fixation de telle sorte qu'il dépasse de ladite face latérale de raccordement ; ledit premier organe de détrompage du second type est constitué par l'absence d'un dit verrou de fixation ; ledit second organe de détrompage du premier type est constitué par un évidement recevant, en position accouplée, la partie dudit verrou de fixation qui dépasse de ladite face latérale de raccordement ; et ledit second organe de détrompage du second type est constitué par une protubérance s'engageant, en position accouplée, dans ledit logement.

Selon un autre mode de réalisation particulier de l'invention, un tel disjoncteur différentiel dans lequel le disjoncteur multipolaire comprend, en correspondance avec chaque borne de raccordement, un logement qui débouche au niveau de ladite face latérale de raccordement et un verrou de fixation emboîtable et déplaçable dans le logement est caractérisé en ce que : une face plane dudit cache-fil est destinée à venir s'appliquer contre ladite face latérale de raccordement du disjoncteur multipolaire lorsque le disjoncteur multipolaire est accouplé au bloc de protection différentielle ; ledit premier organe de détrompage du premier type est constitué par la présence dans ledit logement d'un dit verrou de fixation de telle sorte qu'il dépasse de ladite face latérale de raccordement ; ledit premier organe de détrompage du second type est constitué par la présence dans ledit logement d'une pièce de détrompage de telle sorte qu'elle dépasse de ladite face latérale de raccordement, cette pièce de détrompage étant plus étroite que ledit verrou de fixation au niveau de sa partie qui dépasse de ladite face latérale de raccordement ; ledit second organe de détrompage du premier type est constitué par un évidement recevant, en position accouplée, la partie dudit verrou de fixation qui dépasse de ladite face latérale de raccordement ; et ledit second organe de détrompage du second type est constitué par une encoche recevant, en position accouplée, la partie de la pièce de détrompage qui dépasse de ladite face latérale de raccordement.

Selon un autre mode de réalisation particulier de l'invention, un tel disjoncteur différentiel dans lequel lesdits disjoncteurs multipolaires peuvent être à 2, 3 ou 4 pôles et lesdits blocs de protection différentielle peuvent être également à 2, 3 ou 4 pôles est caractérisé en ce que :
si un organe de détrompage du premier type est appelé A ;
si un organe de détrompage du second type est appelé B ;
si un disjoncteur multipolaire est appelé DX où X est le nombre de pôles ;
et si un bloc de protection différentielle est appelé PX où X est le nombre de pôles,
alors les combinaisons des différents types des organes de détrompage sont les suivantes :
pour D2 : A-B
pour P2 : A-B
pour D3 : A-B-A
pour P3 : A-B-A
pour D4 : A-B-B-A
pour P4 : A-B-B-A.

Ces objets, caractéristiques et avantages, ainsi que d'autres de la présente invention seront mieux compris lors de la description détaillée d'exemples de réalisation qui va suivre, illustrée par les figures annexées parmi lesquelles :
la figure 1 est une vue en perspective d'un disjoncteur différentiel selon l'invention, les deux éléments du disjoncteur différentiel étant en position désaccouplée ;
la figure 2 est une vue en perspective du disjoncteur différentiel de la figure 1, les deux éléments du disjoncteur différentiel étant en position accouplée ;
la figure 3 est une vue générale de face d'un disjoncteur différentiel à 2 pôles selon la présente invention ;
la figure 4 est une vue générale de face d'un disjoncteur différentiel équivalent à celui de la figure 3 mais à 3 pôles ;
la figure 5 est une vue générale de face d'un disjoncteur différentiel semblable à celui de la figure 3 mais à 4 pôles ;
la figure 6 est une vue générale de face d'un disjoncteur différentiel selon les figures précédentes, dans lequel on voit l'impossibilité d'accouplement du disjoncteur différentiel lorsque l'un des éléments est à 2 pôles et l'autre élément est à 4 pôles ;
la figure 7 est une vue générale de face d'un disjoncteur différentiel selon les figures précédentes, dans lequel on voit l'impossibilité d'accouplement du disjoncteur différentiel lorsque l'un des éléments est à 3 pôles et l'autre élément est à 4 pôles ;
la figure 8 est une vue générale de face d'un disjoncteur différentiel selon les figures précédentes, dans lequel on voit l'impossibilité d'accouplement du disjoncteur différentiel lorsque l'un des éléments est à 2 pôles et l'autre élément est à 3 pôles ;
la figure 9 est une vue en perspective du disjoncteur différentiel de la figure 6 ;
la figure 10 est une vue agrandie partielle de la figure 9, afin de montrer des détails constructifs se rapportant à la présente invention ;
la figure 11 est une vue partielle agrandie et en perspective d'une variante de réalisation d'un disjoncteur différentiel selon la présente invention ; et
les figure 12A à 12I sont des vues schématiques montrant de façon exhaustive toutes les combinaisons possibles de tentatives d'accouplement pour un disjoncteur différentiel selon la présente invention dans lequel les deux éléments qui constituent un tel disjoncteur différentiel comprennent respectivement 2 pôles, 3 pôles et 4 pôles.

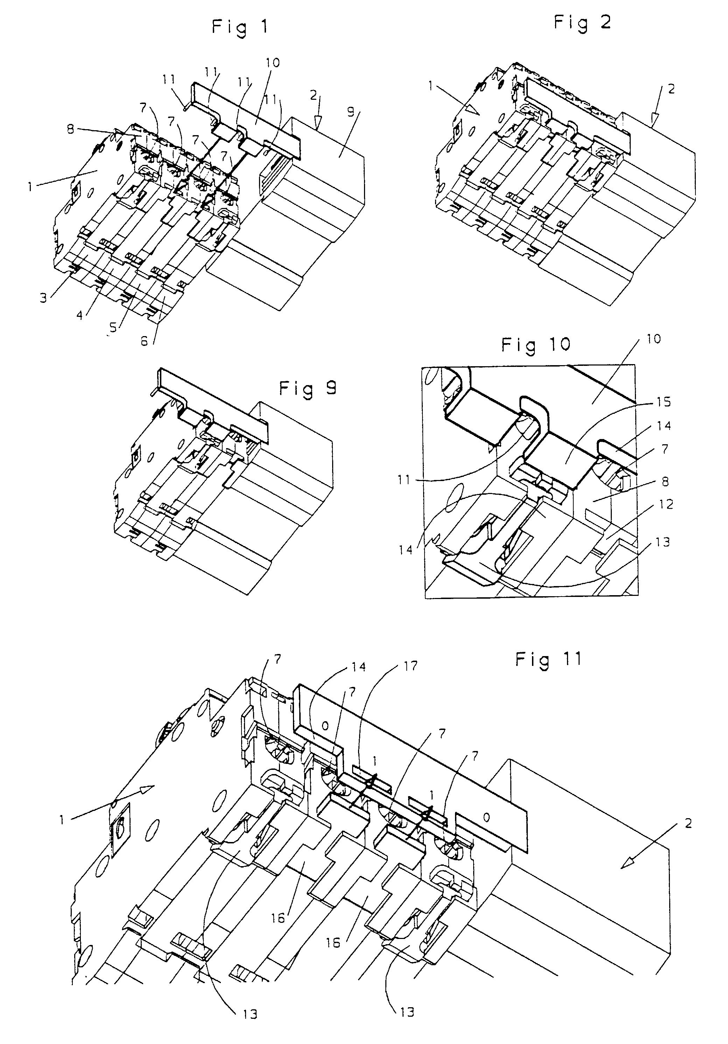

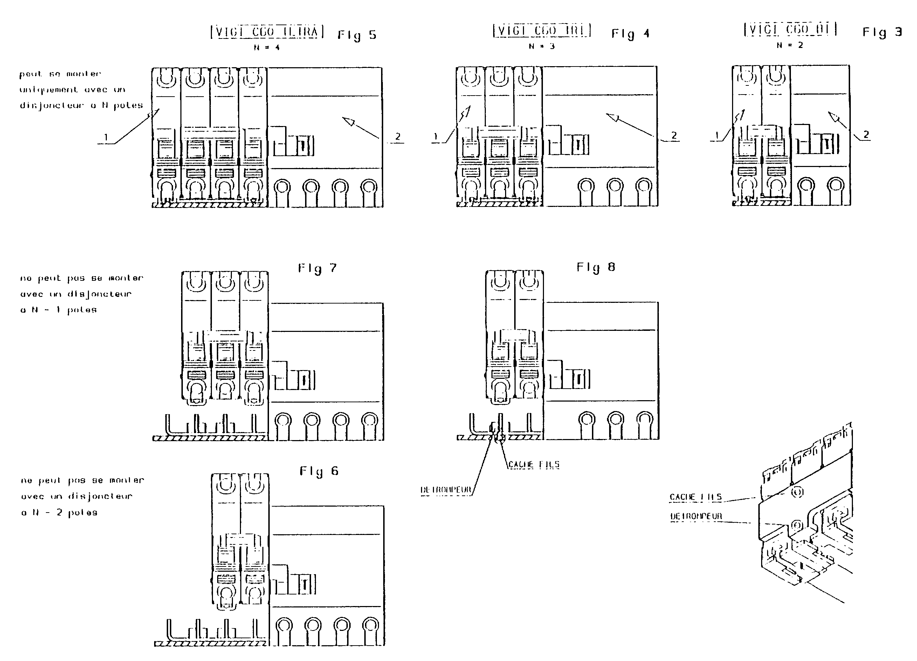

Sur les figures 1 et 2, on distingue en vue de côté un disjoncteur multipolaire 1 conçu pour quatre pôles et un bloc de protection différentielle 2 conçu pour quatre pôles. Le disjoncteur multipolaire et le bloc de protection différentielle 2 ayant le même nombre de pôles, ces deux éléments peuvent donc être accouplés l'un à l'autre afin de constituer ensemble ce que l'on appelle un disjoncteur différentiel, ce disjoncteur différentiel étant en l'occurrence conçu pour quatre pôles.

Sur la figure 4, on distingue d'une façon similaire un disjoncteur différentiel conçu pour trois pôles, ce disjoncteur différentiel pour trois pôles étant constitué par un disjoncteur multipolaire 1 conçu pour trois pôles auquel est accouplé un bloc de protection différentielle 2 conçu pour trois pôles. Sur la figure 3, on distingue d'une façon similaire un disjoncteur différentiel pour deux pôles, ce disjoncteur différentiel pour deux pôles étant constitué par un disjoncteur multipolaire 1 conçu pour deux pôles auquel est accouplé un bloc de protection différentielle 2 conçu pour deux pôles.

Sur la figure 1 un disjoncteur différentiel est constitué, de façon connue, en accouplant un disjoncteur multipolaire 1 et un bloc de protection différentielle 2. Le disjoncteur multipolaire 1 est constitué de façon générale par un certain nombre de dispositifs de coupure semblables 3, 4, 5, 6 qui sont fixés l'un à l'autre côte à côte. Le nombre de dispositifs de coupure correspond au nombre de pôles du disjoncteur multipolaire 1, ce nombre étant de quatre dans cet exemple. Le disjoncteur multipolaire 1 comprend aussi quatre bornes de raccordement 7 disposées en ligne de façon équidistante au niveau d'une face latérale de raccordement 8. Le bloc de protection différentielle 2 est prévu pour s'accoupler au disjoncteur multipolaire 1, et par conséquent ce bloc de protection différentielle 2 est également conçu, dans cet exemple, pour quatre pôles. Le bloc de protection différentielle 2 comprend un boîtier de protection 9 et un cache-fil 10 qui supporte quatre fils de raccordement 11 agencés en ligne de façon équidistante et qui correspondent respectivement aux quatre pôles. Les quatre bornes de raccordement 7 sont agencées de façon à être respectivement en correspondance avec les quatre fils de raccordement 11, de telle sorte que lorsque l'on accouple le bloc de protection différentielle 2 au disjoncteur multipolaire 1, chaque borne de raccordement 7 vienne se connecter au fil de raccordement 11 correspondant. Le disjoncteur différentiel est alors dans une position accouplée qui est représentée sur la figure 2, et dans cette position accouplée le disjoncteur différentiel peut fonctionner normalement.

Comme cela a été exposé précédemment, un objet de la présente invention consiste à faire en sorte qu'on ne puisse accoupler un disjoncteur multipolaire à un bloc de protection différentielle que lorsque ces deux éléments sont conçus pour le même nombre de pôles. Dans la pratique, les disjoncteurs différentiels classiques peuvent être conçus pour 2 pôles, 3 pôles et 4 pôles.

Dans les cas de figure qui sont représentés sur les figures 3 à 5, le disjoncteur différentiel comporte à chaque fois un disjoncteur multipolaire 1 et un bloc de protection différentielle 2 ayant le même nombre de pôles (respectivement 2, 3 et 4 pôles), et par conséquent dans ces cas, le disjoncteur différentiel ainsi agencé peut fonctionner normalement.

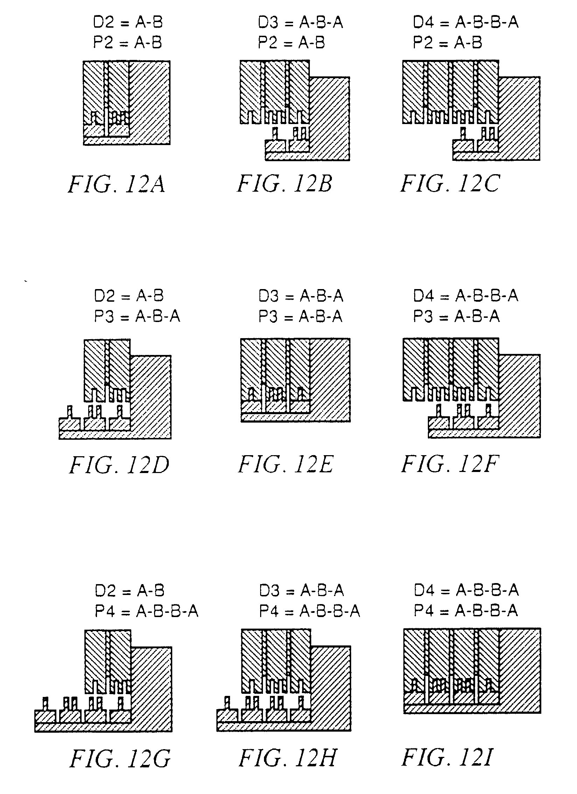

Dans les cas de figure qui sont représentés sur les figures 6 à 8, on tente d'accoupler un disjoncteur multipolaire et un bloc de protection différentielle n'ayant pas le même nombre de pôles (sur la figure 6, 2 pôles avec 4 pôles ; sur la figure 7, 3 pôles avec 4 pôles ; sur la figure 8, 2 pôles avec 3 pôles), et par conséquent dans ces cas, le disjoncteur différentiel ainsi agencé ne peut pas fonctionner normalement.

Il faut donc que l'on ne puisse pas l'accoupler. Par conséquent, si on tente d'accoupler ainsi un disjoncteur multipolaire avec un bloc de protection différentielle ayant un nombre de pôles différents, cet accouplement ne doit pas être rendu possible, conformément à l'objet de la présente invention.

Cette impossibilité d'accouplement est obtenue par des organes de détrompage qui sont agencés sur les deux éléments séparables 1, 2 du disjoncteur différentiel, ces organes de détrompage étant décrits en détail ci-après.

Avant de décrire en détail un mode de réalisation particulier de ces organes de détrompage, il convient de décrire plus en détail certaines dispositions constructives classiques qui sont parfois utilisées. Le disjoncteur multipolaire 1 comprend, en correspondance avec chaque borne de raccordement 7, un logement 12 (voir figure 10) qui débouche au niveau de la face latérale de raccordement 8 et un verrou de fixation 13 emboîtable et déplaçable dans le logement 12. Pour fixer le disjoncteur multipolaire 1 sur un support (non représenté) prévu à cet usage, on applique une face verticale 14 du disjoncteur contre le support et on déplace le ou les verrous de fixation 13 en les faisant glisser le long du ou des logements 12, afin de les enclencher sur des éléments de verrouillage appropriés (non représentés) prévus sur ce support. Quelle que soit la position du verrou 13, celui-ci dépasse toujours de la face latérale de raccordement 8. Le cache-fil du bloc de protection différentielle est prévu pour venir s'appliquer contre la face latérale 8 de telle sorte que les fils 11 viennent se connecter avec les bornes 7 correspondantes.

Les organes de détrompage qui font plus particulièrement l'objet de la présente invention sont décrits maintenant. Comme on peut le voir en particulier sur la figure 10, des premiers éléments de détrompage sont prévus au niveau du disjoncteur multipolaire et des seconds organes de détrompage sont prévus au niveau du cache-fil 10 du bloc de protection différentielle 2. Le premier organe de détrompage peut être d'un premier type ou d'un second type. Le premier organe de détrompage du premier type est obtenu simplement par la présence d'un verrou de fixation 13 dans le logement 12. Le premier organe de détrompage du second type est obtenu simplement par l'absence d'un verrou de fixation 13 dans un logement 12. Un second organe de détrompage d'un premier type est obtenu, au niveau du cache-fil 10, par un évidement 14 ménagé dans ce cache-fil 10. Le second organe de détrompage du second type est obtenu par une protubérance 15 qui fait corps avec le cache-fil 10 et qui s'étend vers le bas à partir du cache-fil 10. Cette protubérance 15 est agencée de façon à venir s'emboîter dans le logement 12 lorsqu'il n'y a pas de verrou de fixation 13 disposé dans ce logement 12. L'évidement 14 est agencé de façon à laisser passer la partie du verrou de fixation 13 qui dépasse de la face latérale 8.

Il résulte de cela que le cache-fil 10 ne peut venir s'appliquer contre la face latérale 8 que dans les cas suivants :
- une protubérance 15 du cache-fil 10 doit pouvoir s'emboîter dans un logement 12 qui est en correspondance avec elle, de telle sorte que le cache-fil puisse venir s'appliquer contre la face latérale 8 ; et simultanément
- un logement 14 est présent au niveau d'un verrou de fixation 13, de telle sorte que la partie du verrou de fixation qui dépasse de la face latérale 8 puisse s'engager dans l'évidement 14 sans empêcher le cache-fil de venir s'appliquer contre la face latérale 12.

Par contre, le cache-fil ne peut pas venir s'appliquer contre la face latérale 8 lorsqu'une protubérance 15 est située en regard d'un verrou de fixation 13.

Sur la figure 10, on voit que le cache-fil 10 ne peut pas venir s'appliquer contre la face latérale 8 parce qu'une protubérance 15 se trouve en face d'un verrou de fixation 13.

On peut exprimer autrement cette impossibilité d'adaptation du cache-fil 10 sur le disjoncteur multipolaire 1 par le fait que, au niveau du disjoncteur multipolaire 1, il y a un premier organe de détrompage du premier type (le verrou de fixation 13) alors que, en face de celui-ci, il y a au niveau du cache-fil 10 du blocs de protection différentielle 2 un organe de détrompage du second type constitué par la protubérance 15. Autrement dit, l'accouplement du disjoncteur multipolaire 1 et du bloc de protection différentielle 2 ne peut pas être obtenu quand les premier et second organes de détrompage qui sont en correspondance ne sont pas du même type.

La figure 11 représente un autre mode de réalisation des organes de détrompage selon la présente invention. Dans cet autre mode de réalisation, le premier organe de détrompage du premier type est pareillement obtenu par la présence d'un verrou de fixation 13 dans un logement 12 mais le premier organe de détrompage du second type est obtenu par la présence dans le logement 12 d'une pièce de détrompage 16 qui dépasse de la surface latérale 8 mais qui est plus étroite que le verrou de fixation 13 au niveau de sa partie qui dépasse de la face latérale 8. Le second organe de détrompage du premier type est constitué pareillement par un évidement 14 mais le second organe de détrompage du second type est constitué par une encoche ou un trou 17 qui reçoit, en position accouplée, la partie de la pièce de détrompage 16 qui dépasse de la face latérale 8, les dimensions de cette encoche ou de ce trou 17 étant telles que le trou 17 ne permet pas de recevoir, en position accouplée, la partie du verrou de fixation 13 qui dépasse de la face latérale 8. On peut voir sur la figure 11 que l'accouplement du disjoncteur multipolaire 1 et du bloc de protection différentielle 2 est possible parce que, au niveau de chacune des bornes 7, les premier et second organes de détrompage en correspondance (c'est-à-dire 13, 14 et 16, 17) sont, à chaque fois, du même type.

La figure 12 illustre de façon schématique des combinaisons possibles des organes de détrompage du premier type et du second type que l'on peut prévoir respectivement sur un ensemble de disjoncteurs multipolaires 1 qui peuvent être des types à deux pôles, à trois pôles ou à quatre pôles et d'un ensemble de blocs de protection différentielle 2 qui peuvent être des types à deux pôles, à trois pôles ou à quatre pôles. En-dessous de chacune des figures 12A à 12I, une inscription symbolique est faite en utilisant les définitions suivantes :
- un organe de détrompage du premier type est appelé A ;
- un organe de détrompage du second type est appelé B;
- un disjoncteur multipolaire 1 est appelé DX où X est le nombre de pôles ;
- un bloc de protection différentielle 2 est appelé PX où X est le nombre de pôles.

On voit par exemple que pour la figure 12A, on a un disjoncteur multipolaire à 2 pôles qui comprend des premiers organes de détrompage respectivement du premier type et du second type (inscription symbolique D2 = A-B) et on a un bloc de protection différentielle à 2 pôles qui comprend des seconds organes de détrompage respectivement du premier type et du second type (inscription symbolique P2 = A-B).

On obtient les combinaisons suivantes :
- Pour la figure 12A :: D2 = A-B
P2 = A-B
- Pour la figure 12B :: D3 = A-B-A
P2 = A-B
- Pour la figure 12C :: D4 = A-B-B-A
P2 = A-B
- Pour la figure 12D :: D2 = A-B
P3 = A-B-A
- Pour la figure 12E :: D3 = A-B-A
P3 = A-B-A
- Pour la figure 12F :: D4 = A-B-B-A
P3 = A-B-A
- Pour la figure 12G :: D2 = A-B
P4 = A-B-B-A
- Pour la figure 12H :: D3 = A-B-A
P4 = A-B-B-A
- Pour la figure 12J :: D4 = A-B-B-A
P4 = A-B-B-A

On voit que les associations d'un disjoncteur multipolaire 1 et d'un bloc de protection différentielle 2 qui permettent un accouplement correct afin de constituer un disjoncteur différentiel sont les combinaisons qui sont représentées uniquement sur les figures 12A, 12E et 12I. Les autres combinaisons représentées sur les figures 12B, 12C, 12D, 12F, 12G et 12H ne permettent pas un accouplement du disjoncteur multipolaire et du bloc de protection différentielle parce que ces deux éléments ont à chaque fois un nombre de pôles différents l'un de l'autre.

## Revendications

1. Disjoncteur différentiel modulaire comprenant:
un disjoncteur multipolaire (1) choisi parmi un groupe de disjoncteurs multipolaires qui diffèrent les uns des autres par leur nombre de pôles, chaque disjoncteur multipolaire ayant des bornes de raccordement (7), en nombre égal au nombre de pôles, situées au niveau d'une face latérale de raccordement (8) du disjoncteur multipolaire (1);
un bloc de protection différentielle (2) choisi parmi un groupe de blocs de protection différentielle qui diffèrent les uns des autres par leur nombre de pôles, chaque bloc de protection différentielle (2) ayant des fils de raccordement (11), en nombre égal au nombre de pôles, montés sur un cache-fil (10) rigide,
un quelconque de ces disjoncteurs multipolaires (1) étant prévu pour pouvoir s'accoupler latéralement de façon amovible à un bloc de protection différentielle (2) de façon à ce que lesdites bornes de raccordement (7) se connectent auxdits fils de raccordement (11) respectifs ;
caractérisé en ce que:
ledit cache-fil (10) comporte des premiers organes de détrompage qui coopèrent avec des seconds organes de détrompage ménagés au niveau de ladite face latérale de raccordement (8) du disjoncteur multipolaire (1), de telle sorte qu'un disjoncteur multipolaire donné ne puisse s'accoupler qu'à un bloc de protection différentielle (2) ayant le même nombre de pôles,
lesdits premiers et seconds organes de détrompage étant soit d'un premier type, soit d'un second type, et étant susceptibles de s'accoupler l'un à l'autre uniquement lorsqu'ils sont du même type, lequel est choisi pour chaque borne de raccordement (7) de chaque disjoncteur multipolaire (1) et pour chaque fil de raccordement (11) de chaque bloc de protection différentielle (2), de telle sorte que ledit accouplement entre un disjoncteur multipolaire (1) donné et un bloc de protection différentielle (2) ayant le même nombre de pôles soit rendu possible du fait que les premiers organes de détrompage sont simultanément tous accouplés aux seconds organes de détrompage correspondants.

2. Disjoncteur différentiel modulaire selon la revendication 1, dans lequel le disjoncteur multipolaire (1) comprend, en correspondance avec chaque borne de raccordement (7), un logement (12) qui débouche au niveau de ladite face latérale de raccordement (8) et un verrou de fixation (13) emboîtable et déplaçable dans le logement (12), caractérisé en ce que :
une face plane dudit cache-fil (10) est destinée à venir s'appliquer contre ladite face latérale de raccordement (8) du disjoncteur multipolaire (1) lorsque le disjoncteur multipolaire (1) est accouplé au bloc de protection différentielle (2);
ledit premier organe de détrompage du premier type est constitué par la présence dans ledit logement (12) d'un verrou de fixation (13) de telle sorte qu'il dépasse de ladite face latérale de raccordement (8);
ledit premier organe de détrompage du second type est constitué par l'absence d'un verrou de fixation (13) dans ledit logement (12);
ledit second organe de détrompage du premier type est constitué par un évidement (14) recevant, en position accouplée, la partie dudit verrou de fixation (13) qui dépasse de ladite face latérale de raccordement (8); et
ledit second organe de détrompage du second type est constitué par une protubérance (15) s'engageant, en position accouplée, dans ledit logement (12).

3. Disjoncteur différentiel modulaire selon la revendication 1, dans lequel le disjoncteur multipolaire (1) comprend, en correspondance avec chaque borne de raccordement (7), un logement (12) qui débouche au niveau de ladite face latérale de raccordement (8) et un verrou de fixation (13) emboîtable et déplaçable dans le logement (12), caractérisé en ce que :
une face plane dudit cache-fil (10) est destinée à venir s'appliquer contre ladite face latérale de raccordement (8) du disjoncteur multipolaire (1) lorsque le disjoncteur multipolaire (1) est accouplé au bloc de protection différentielle (2);
ledit premier organe de détrompage du premier type est constitué par la présence dans ledit logement (12) d'un verrou de fixation (13) de telle sorte qu'il dépasse de ladite face latérale de raccordement (8);
ledit premier organe de détrompage du second type est constitué par la présence dans ledit logement (12) d'une pièce de détrompage (16) de telle sorte qu'elle dépasse de ladite face latérale de raccordement (8), cette pièce de détrompage (16) étant plus étroite que ledit verrou de fixation (13) au niveau de sa partie qui dépasse de ladite face latérale de raccordement (8);
ledit second organe de détrompage du premier type est constitué par un évidement (14) recevant, en position accouplée, la partie dudit verrou de fixation (13) qui dépasse de ladite face latérale de raccordement (8) ; et
ledit second organe de détrompage du second type est constitué par une encoche (17) recevant, en position accouplée, la partie de la pièce de détrompage (16) qui dépasse de ladite face latérale de raccordement (8).

4. Disjoncteur différentiel modulaire selon la revendication 1, dans lequel lesdits disjoncteurs multipolaires (1) peuvent être à 2, 3 ou 4 pôles, et lesdits blocs de protection différentielle (2) peuvent être également à 2, 3 ou 4 pôles,
caractérisé en ce que :
si un organe de détrompage du premier type est appelé A ;
si un organe de détrompage du second type est appelé B ;
si un disjoncteur multipolaire est appelé DX où X est le nombre de pôles ;
et si un bloc de protection différentielle (2) est appelé PX où X est le nombre de pôles,
alors les combinaisons des différents types des organes de détrompage sont les suivantes :
pour D2 : A-B
pour P2 : A-B
pour D3 : A-B-A
pour P3 : A-B-A
pour D4 : A-B-B-A
pour P4 : A-B-B-A

## Patentansprüche

1. Modularer Fehlerstromleistungsschalter, bestehend aus
- einem Mehrpolleistungsschalter (1), der aus einer Reihe von Mehrpolleistungsschaltern ausgewählt wurde, die sich in der Anzahl ihrer Pole voneinander unterscheiden, wobei jeder Mehrpolleistungsschalter eine der Anzahl der Pole entsprechende Anzahl von, an einer seitlichen Anschlußfläche (8) des Mehrpolleistungsschalters (1) angeordneten Anschlußklemmen (7) aufweist, und
- einem Fehlerstromblock (2), der aus einer Reihe von Fehlerstromblöcken ausgewählt wurde, die sich in der Anzahl ihrer Pole voneinander unterscheiden, wobei jeder Fehlerstromblock (2) eine der Anzahl der Pole entsprechende Anzahl von, in einer biegesteifen Anschlußdrahtblende (10) angeordneten Anschlußdrähten (11), aufweist, wobei
- ein beliebiger dieser Mehrpolleistungsschalter (1) dazu ausgelegt ist, lösbar seitlich an einen Fehlerstromblock (2) angebaut werden zu können, derart daß die genannten Anschlußklemmen (7) mit den zugehörigen genannten Anschlußdrähten (11) verbunden werden, dadurch gekennzeichnet, daß
die genannte Anschlußdrahtblende (10) erste Verwechslungsschutzvorrichtungen aufweist, die mit, an der genannten seitlichen Anschlußfläche (8) des Mehrpolleistungsschalters (1) angeordneten zweiten Verwechslungsschutzvorrichtungen zusammenwirken, derart daß ein bestimmter Mehrpolleistungsschalter nur an einen Fehlerstromblock (2) angebaut werden kann, der die gleiche Anzahl von Polen aufweist,
wobei die genannten ersten und zweiten Verwechslungsschutzvorrichtungen entweder gemäß einem ersten Typ oder gemäß einem zweiten Typ ausgebildet sind und nur dann miteinander verbunden werden können, wenn sie vom gleichen Typ sind, welcher in Abhängigkeit von jeder Anschlußklemme (7) jedes Mehrpolleistungsschalters (1) bzw. in Abhängigkeit von jedem Anschlußdraht (11) jedes Fehlerstromblocks (2) gewählt wird, derart daß der genannte Anbau eines bestimmten Mehrpolleistungsschalters (1) an einen, die gl.eiche Anzahl von Polen aufweisenden Fehlerstromblock (2) dadurch ermöglicht wird, daß sämtliche ersten Verwechslungsschutzvorrichtungen gleichzeitig mit den zugehörigen zweiten Verwechslungsschutzvorrichtungen verbunden werden.

2. Modularer Fehlerstromleistungsschalter nach Anspruch 1, bei dem der Mehrpolleistungsschalter (1) in Höhe jeder Anschlußklemme (7) eine, zur genannten seitlichen Anschlußfläche (8) hin offene Aufnahme (12) sowie einen in die Aufnahme (12) einsetzbaren und darin verschiebbaren Befestigungsriegel (13) aufweist, dadurch gekennzeichnet, daß
eine ebene Fläche der genannten Anschlußdrahtblende (10) dazu dient, beim Anbau des Mehrpolleistungsschalters (1) an den Fehlerstromblock (2) auf die genannte seitliche Anschlußfläche (8) des Mehrpolleistungsschalters (1) aufgesetzt zu werden,
wobei die genannte erste Verwechslungsschutzvorrichtung des ersten Typs dadurch gebildet wird, daß in der genannten Aufnahme (12) ein Befestigungsriegel (13) derart angeordnet ist, daß er aus der genannten seitlichen Anschlußfläche (8) hervorsteht,
die genannte erste Verwechslungsschutzvorrichtung des zweiten Typs dadurch gebildet wird, daß kein Befestigungsriegel (13) in der genannten Aufnahme (12) angeordnet ist,
die genannte zweite Verwechslungsschutzvorrichtung des ersten Typs durch eine Ausnehmung (14) gebildet wird, die in der Anbaustellung den aus der genannten seitlichen Anschlußfläche (8) hervorstehenden Teil des genannten Befestigungsriegels (13) aufnimmt, und
die genannte zweite Verwechslungsschutzvorrichtung des zweiten Typs durch einen Vorsprung (15) gebildet wird, der in der Anbaustellung in die genannte Aufnahme (12) eingreift.

3. Modularer Fehlerstromleistungsschalter nach Anspruch 1, bei dem der Mehrpolleistungsschalter (1) in Höhe jeder Anschlußklemme (7) eine, zur genannten seitlichen Anschlußfläche (8) hin offene Aufnahme (12) sowie einen in die Aufnahme (12) einsetzbaren und in ihr verschiebbaren Befestigungsriegel (13) aufweist, dadurch gekennzeichnet, daß
eine ebene Fläche der genannten Anschlußdrahtblende (10) dazu dient, beim Anbau des Mehrpolleistungsschalters (1) an den Fehlerstromblock (2) auf die genannte seitliche Anschlußfläche (8) des Mehrpolleistungsschalters (1) aufgesetzt zu werden,
wobei die genannte erste Verwechslungsschutzvorrichtung des ersten Typs dadurch gebildet wird, daß in der genannten Aufnahme (12) ein Befestigungsriegel (13) derart angeordnet ist, daß er aus der genannten seitlichen Anschlußfläche (8) hervorsteht,
die genannte erste Verwechslungsschutzvorrichtung des zweiten Typs dadurch gebildet wird, daß in der genannten Aufnahme (12) ein Verwechslungsschutzelement (16) derart angeordnet ist, daß es aus der genannten seitlichen Anschlußfläche (8) hervorsteht, wobei dieses Verwechslungsschutzelement (16) schmaler ist als der aus der genannten seitlichen Anschlußfläche (8) hervorstehende Teil des genannten Befestigungsriegels (13),
die genannte zweite Verwechslungsschutzvorrichung des ersten Typs durch eine Ausnehmung (14) gebildet wird, die in der Anbaustellung den aus der genannten seitlichen Anschlußfläche (8) hervorstehenden Teil des genannten Befestigungsriegels (13) aufnimmt, und
die genannte zweite Verwechslungsschutzvorrichtung des zweiten Typs durch einen Schlitz (17) gebildet wird, der in der Anbaustellung den aus der genannten seitlichen Anschlußfläche (8) hervorstehenden Teil des Verwechslungsschutzelements (16) aufnimmt.

4. Modularer Fehlerstromleistungsschalter nach Anspruch 1, bei dem die genannten Mehrpolleistungsschalter (1) zweipolig, dreipolig oder vierpolig und die genannten Fehlerstromblöcke (2) ebenfalls zweipolig, dreipolig oder vierpolig ausgeführt sein können,
dadurch gekennzeichnet, daß
wenn eine Verwechslungsschutzvorrichtung des ersten Typs mit A bezeichnet wird,
wenn eine Verwechslungsschutzvorrichtung des zweiten Typs mit B bezeichnet wird,
wenn ein Mehrpolleistungsschalter mit DX bezeichnet wird, wobei X der Anzahl der Pole entspricht,
und wenn ein Fehlerstromblock (2) mit PX bezeichnet wird, wobei X der Anzahl der Pole entspricht,
sich die möglichen Kombinationen der verschiedenen Typen der Verwechslungsschutzvorrichtungen wie folgt ergeben:
für D2: A-B
für P2: A-B
für D3: A-B-A
für P3: A-B-A
für D4: A-B-B-A
für P4: A-B-B-A.

## Claims

1. A modular differential circuit breaker comprising :
a multipole circuit breaker (1) chosen from a group of multipole circuit breakers which differ from one another by their number of poles, each multipole circuit breaker having connection terminals (7) in equal number to the number of poles, situated at the level of a connecting side face (8) of the multipole circuit breaker (1);
a differential protection unit (2) chosen from a group of differential protection units which differ from one another by their number of poles, each differential protection unit (2) having connection wires (11), in equal number to the number of poles, fitted on a rigid wire cover (10),
any one of these multipole circuit breakers (1) being designed to be able to be coupled laterally in removable manner to a differential protection unit (2) in such a way that said connection terminals (7) connect to said respective connection wires (11);
characterized in that
said wire cover (10) comprises first error prevention parts which cooperate with second error prevention parts arranged at the level of said connecting side face (8) of the multipole circuit breaker (1) in such a way that a given multipole circuit breaker can only be coupled to a differential protection unit (2) having the same number of poles,
said first and second error prevention parts being either of a first type or of a second type and being designed to couple with one another only when they are of the same type, which is chosen for each connection terminal (7) of each multipole circuit breaker (1) and for each connection wire (11) of each differential protection unit (2), in such a way that said coupling between a given multipole circuit breaker (1) and a differential protection unit (2) having the same number of poles is made possible due to the fact that the first error prevention parts are all coupled simultaneously to the corresponding second error prevention parts.

2. The modular circuit breaker according to claim 1, wherein the multipole circuit breaker (1) comprises, in correspondence with each connection terminal (7), a housing (12) which opens out at the level of said connecting side face (8) and a fixing bolt (13) which can be engaged and moved in the housing (12), characterized in that :
a flat face of said wire cover (10) is designed to be applied against said connecting side face (8) of the multipole circuit breaker (1) when the multipole circuit breaker (1) is coupled to the differential protection unit (2);
said first error prevention part of the first type is constituted by the presence in said housing (12) of a fixing bolt (13) in such a way that it extends beyond said connecting side face (8);
said first error prevention part of the second type is constituted by the absence of a fixing bolt (13) in said housing (12);
said second error prevention part of the first type is constituted by a recess (14) receiving, in the coupled position, the part of said fixing bolt (13) which extends beyond said connecting side face (8) ; and
said second error prevention part of the second type is constituted by a protuberance (15) engaging, in the coupled position, in said housing (12).

3. The modular circuit breaker according to claim 1, wherein the multipole circuit breaker (1) comprises, in correspondence with each connection terminal (7), a housing (12) which opens out at the level of said connecting side face (8) and a fixing bolt (13) which can be engaged and moved in the housing (12), characterized in that :
a flat face of said wire cover (10) is designed to be applied against said connecting side face (8) of the multipole circuit breaker (1) when the multipole circuit breaker (1) is coupled to the differential protection unit (2);
said first error prevention part of the first type is constituted by the presence in said housing (12) of a fixing bolt (13) in such a way that it extends beyond said connecting side face (8);
said first error prevention part of the second type is constituted by the presence in said housing (12) of an error prevention part (16) in such a way that it extends beyond said connecting side face (8), this error prevention part (16) being narrower than said fixing bolt (13) at the level of its part which extends beyond said connecting side face (8);
said second error prevention part of the first type is constituted by a recess (14) receiving, in the coupled position, the part of said fixing bolt (13) which extends beyond said connecting side face (8) ; and
said second error prevention part of the second type is constituted by a notch (17) receiving, in the coupled position, the part of the error prevention part (16) which extends beyond said connecting side face (8).

4. The modular circuit breaker according to claim 1, wherein said multipole circuit breakers (1) can be 2-pole, 3-pole or 4-pole, and said differential protection units (2) can also be 2-pole, 3-pole or 4-pole,
characterized in that :
if an error prevention part of the first type is called A ;
if an error prevention part of the second type is called B ;
if a multipole circuit breaker (1) called DX where X is the number of poles ;
and if a differential protection unit (2) is called PX where X is the number of poles, then the combinations of the different types of error prevention parts are the following :
for D2 : A-B
for P2 : A-B
for D3 : A-B-A
for P3 : A-B-A
for D4 : A-B-B-A
for P4 : A-B-B-A
